# EUROPEAN PATENT SPECIFICATION

(11) **EP 2 567 915 B1**
(45) Date of publication and mention of the grant of the patent: **30.04.2014**
(21) Application number: 12153791.4
(22) Date of filing: 03.02.2012
(51) Int. Cl.: B65G 47/84

(54) **Device for actuating levers for locking containers in the receptacles of the output star conveyor in a labeling machine**
Verfahren zum Betätigen von Hebeln zum Sperren von Behältern in den Gefäßen des Ausgabe-Sternförderers in einer Etikettiermaschine
Dispositif d'actionnement de leviers de verrouillage de conteneurs dans les récipients du convoyeur de sortie en étoile dans une machine d'étiquetage

(30) Priority: 07.09.2011 IT VR20110176
(43) Date of publication of application: 13.03.2013
(73) Proprietor: P.E. Labellers S.p.A., 46047 Porto Mantovano (MN) (IT)
(72) Inventor: Ballarotti, Mario, 46045 MARMIROLO MN (IT)
(74) Representative: Modiano, Micaela Nadia

(56) References cited:
- EP-A1- 1 198 302
- FR-A- 1 572 295

## Description

The invention relates to a device for actuating levers for locking containers in the receptacles of an output star conveyor in a labeling machine according to the preamble of claim 1.

Output star conveyors of containers from labeling machines after labeling are known, which rotate and are provided with receptacles arranged equidistant along the circumference designed to accommodate one container each, which receive the containers exiting from the machine directly at the point of input, and which are often connected with two output lines, a line encountered first by the containers in the star conveyor and intended to receive normal production, and a line encountered second which is intended to receive the containers to be rejected i.e. groups of containers that have to be separated from the normal production run.

In order to carry out the selection of the containers to be sent to one or the other of the lines each receptacle is provided with a locking lever that is used in two ways. The first way is to always keep the levers in a neutral position, i.e. not interfering with the containers in the individual receptacles, and in this case the containers exit on the first line that they encounter. But in the second way, the levers are deployed so as to lock the containers in the respective receptacles on the trip from the point of input until the second output line encountered, thus preventing the exit on the first line. Document FR-A-1 572 295 discloses a device for actuating levers for locking containers in the receptacles of an output star conveyor according to the preamble of claim 1.

However, the actuation of the locking levers occurs in the known art in a not entirely satisfactory manner, and thus the aim of the present invention is to provide a device of great simplicity and featuring maximum effectiveness especially in terms of duration.

The intended aim is achieved by a device for actuating levers for locking containers in the receptacles of the output star conveyor in a labeling machine, according to the invention, as defined in claim 1.

Further characteristics and advantages will become better apparent from the description of a preferred, but not exclusive, embodiment of the invention, which is illustrated by way of non-limiting example in the accompanying drawings wherein:
Figures 1 and 2 are schematic plan views with the containers leaving the output star conveyor respectively for the first and for the second route encountered;
Figure 3 is a view of the complete output star conveyor;
Figures 4, 5, 6, 7, 8 show, for the purposes of clarity of illustration, the output star conveyor with a single locking lever in five steps from start to finish of the actuation by the device according to the invention;
Figures 9 and 10 show the output star conveyor again with a single locking lever which is not actuated by the device.

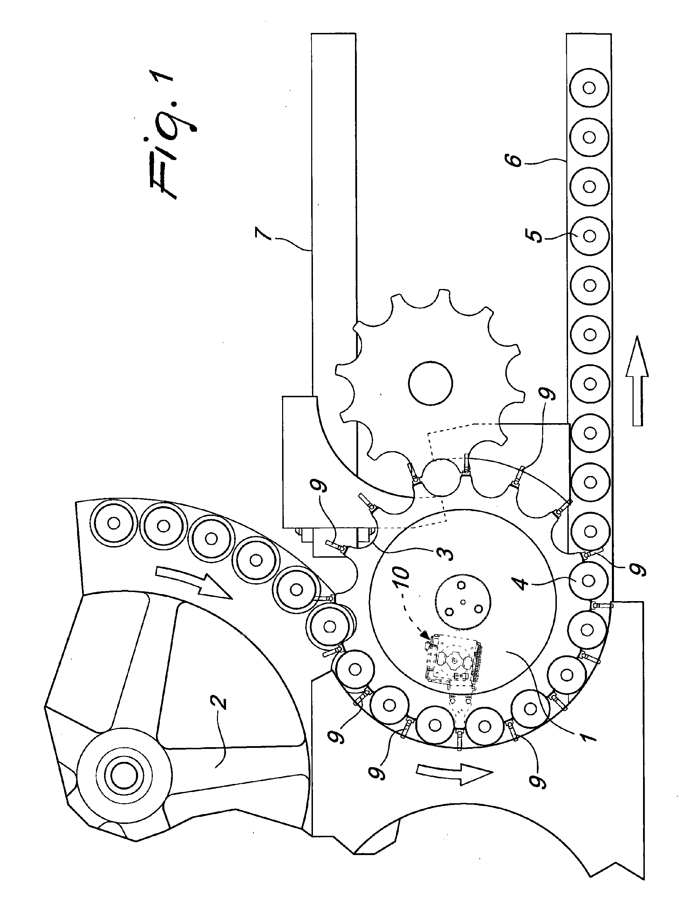

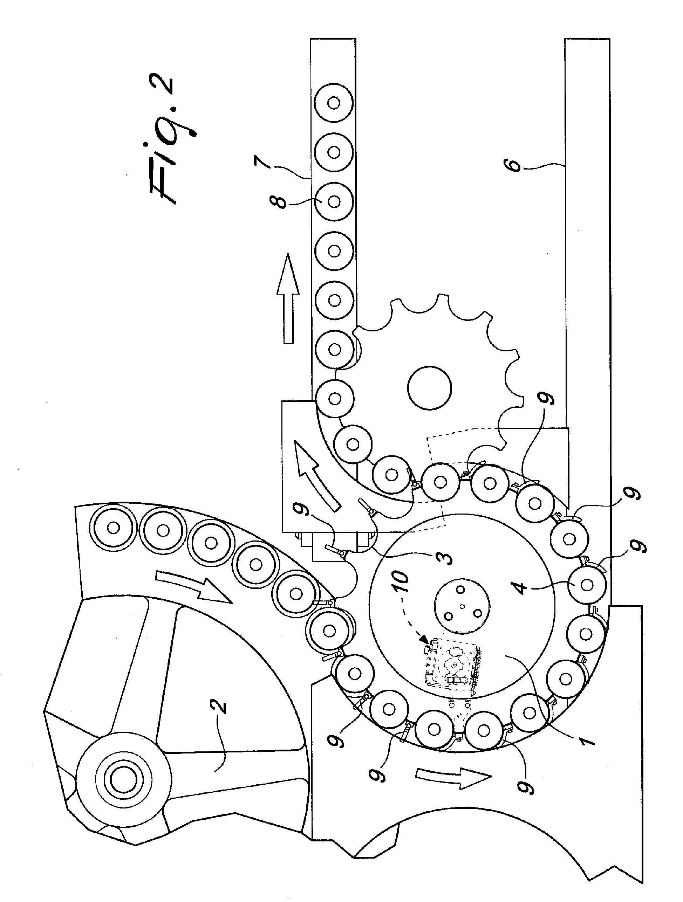

With reference to Figures 1 and 2, the reference numeral 1 generally designates the output star conveyor of the labeling machine 2, which rotates in the direction of the arrow in the figure and is provided at the perimeter with receptacles such as 3 each of which is adapted to accommodate a container such as 4.

The output star conveyor receives the labeled containers directly from the machine 2, and can send them on as per normal production, as is the case with the container 5 shown in Figure 1, to the line 6 that is encountered first, or it can divert them to the line 7 that is encountered second. This is the case with a group of containers like that shown in Figure 2 to which the container 8 belongs, but it could also be a single reject container.

Again with reference to Figures 1 and 2, we can say that the choice of line on which to send the individual containers is made by way of levers for locking with which each receptacle is provided, and for example the reference numeral 9 designates the lever corresponding to the receptacle 3, which can be commanded by the device 10 as needed in two ways.

In fact it can be left by the device in the neutral position, i.e. so as to not interfere with the containers, shown in Figure 1, which is the position in which the levers always arrive at the device, and in this case the containers are sent to the line 6, or they can be closed by the device 10, as shown in Figure 2, immediately after the arrival of the individual containers onto the star conveyor so as to lock them at the encounter with the line 6, thus preventing their exit, and be opened at the line 7 in order to have the containers exit on this line.

Naturally the device 10 for commanding the locking levers, which will now be described, is programmable as a function of the number of containers that have to be diverted to the line 7 and which can range from single containers for rejection, conveniently indicated, to large groups as is the case in Figure 2.

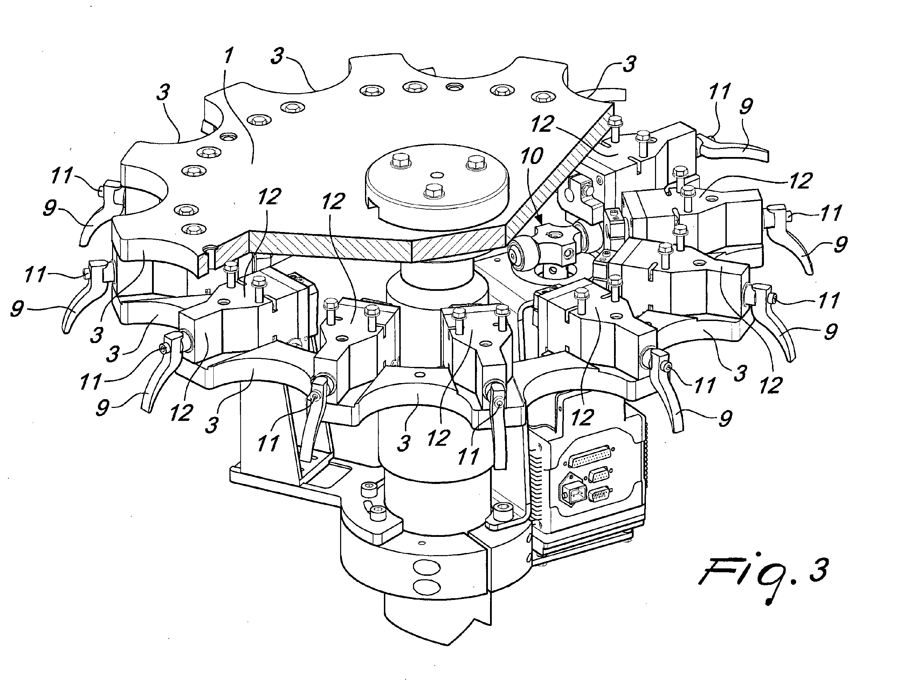

Figure 3 shows, with an interruption for reasons of representation, the output star conveyor 1 in its entirety, with the receptacles such as 3 for accommodating individual containers each one of which is provided with a locking lever such as 9 that is adapted to be commanded by the device 10 according to the invention by following the methods described above.

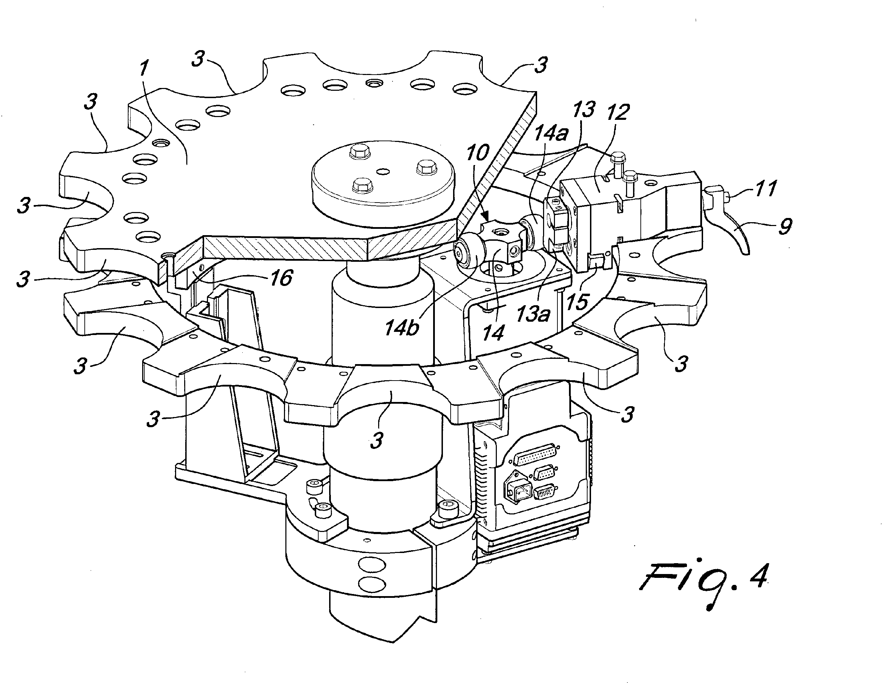

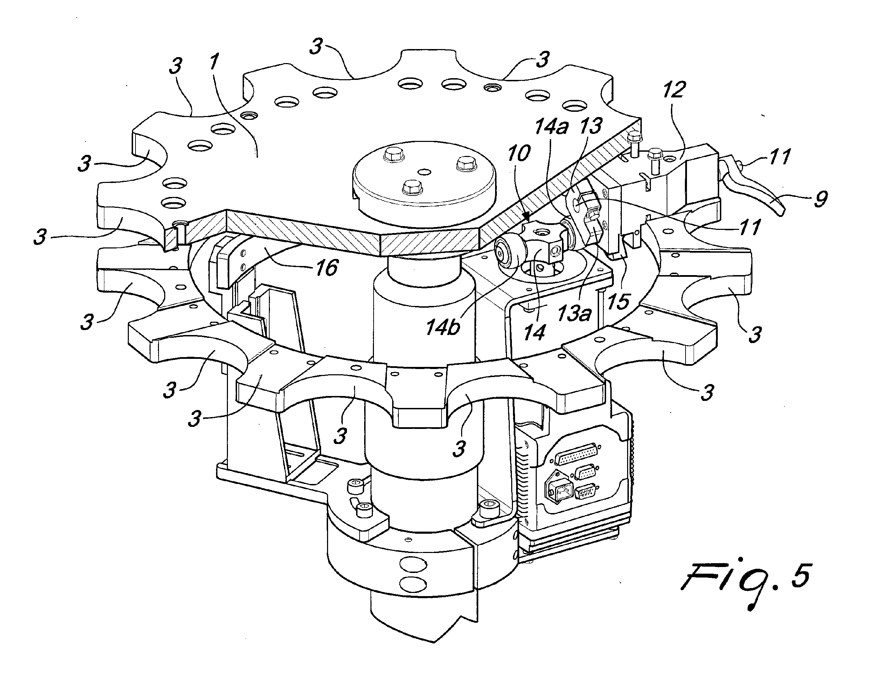

The locking levers 9 are all identical, and therefore it was decided to show only one of them in the following figures, which are divided into two groups: a first group, Figures 4 to 8, describes the operation of a lever like those that appear in Figure 2, and Figures 9 and 10 describe the operation of a lever of Figure 1.

The locking lever 9 in the figures that follow is arranged at the outer end of the shaft 11, accommodated in the support 12, which at its inner end is provided with the block 13 with eccentric protrusion 13a.

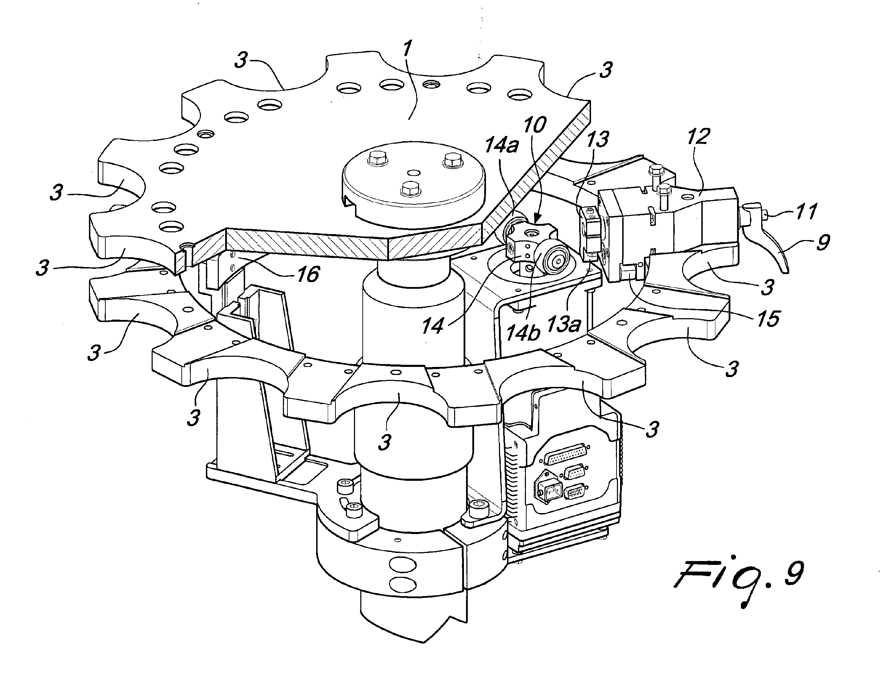

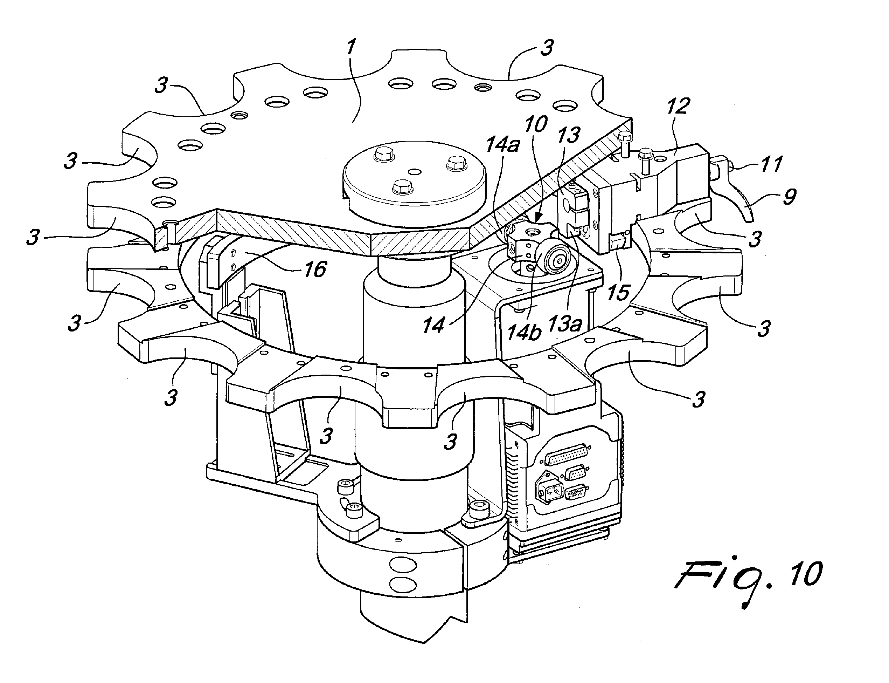

The device 10 comprises the abutment 14 which is provided with two mutually opposite appendages which are provided with wheels 14a, 14b, and this abutment can be brought, following rotation about an axis parallel to that of the output star conveyor 1 and according to a program, from the first position shown in Figures 4 to 8 to the position shown in Figures 9 and 10 and subsequently to the first position again, and so on.

Let us begin with Figures 4 to 8.

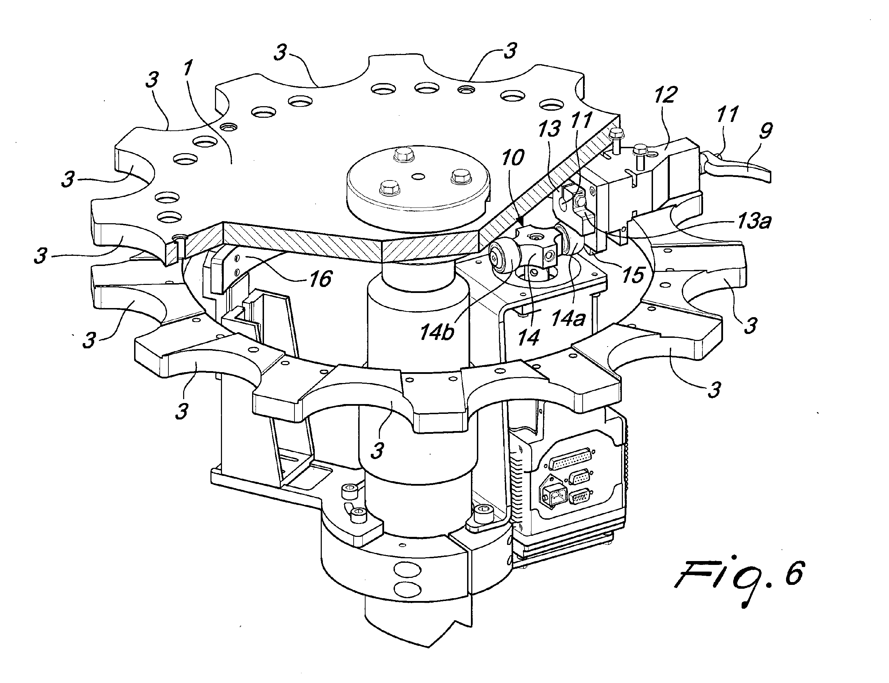

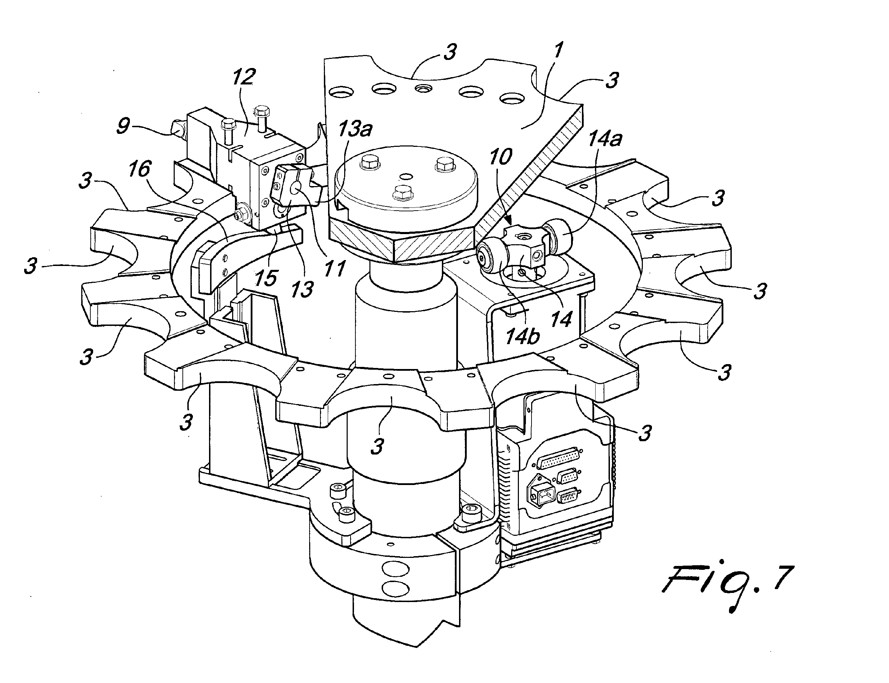

With the abutment 14 in the first position, the lever 9 is shown which, following interference from the wheel 14a with the eccentric protrusion 13a, is gradually brought from the neutral position of Figure 4 to the closed position in Figure 6 which is then maintained until a position just prior to that shown in Figure 7, with the corresponding container being retained.

In the meantime the reset lever 15, which, in the situation in which the locking lever 9 is in the neutral position as shown in Figure 4, is hidden inside the support 12, is gradually brought, thanks to conventional means of connection with the shaft 11, to the situation of complete protrusion from the support 12, which is reached when the locking lever 9 is in the closed condition shown in Figure 6.

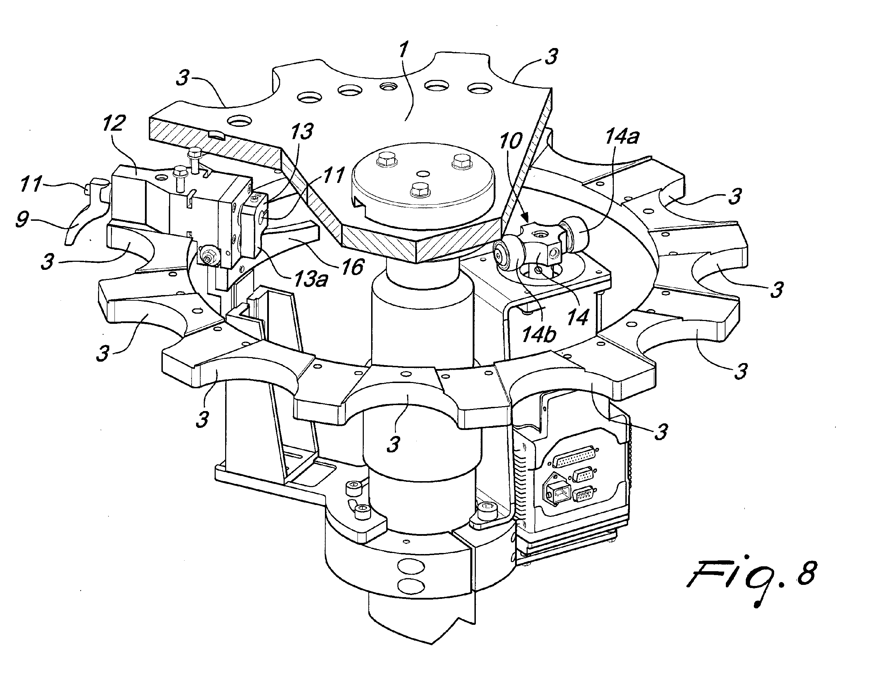

Having reached the position immediately preceding that shown in Figure 7, with the lever 9 closed, the reset lever 15 comes into contact with the cam 16 and gradually returns to the condition of retraction shown in Figure 4 thus causing the return of the lever 9 to the neutral condition, where it was in Figure 4, as shown in Figure 8.

The corresponding container is thus freed, and can be sent along the line 7, and the cycle is complete.

Now let us consider Figures 9 and 10, in which the abutment 14 has been made to rotate through ninety degrees bringing it to a position in which, as shown in these figures, the block 13 passes without the corresponding eccentric protrusion 13a coming into contact with either of the wheels 14a, 14b, thus keeping the lever 9 in the neutral condition that ensures the operating conditions shown in Figure 1. Naturally the reset lever 15 remains inactive.

The invention described is susceptible of numerous modifications and variations, all of which are within the scope of the appended claims.

## Claims

1. A device (10) for actuating levers (9) for locking containers in receptacles (3) of an output star conveyor (1) in a labeling machine, the device comprising for each receptacle (3) a support (12) for a shaft (11) which is connected at its outer end to one of said levers (9) which are always presented to the device (10) in a neutral position, such as to apply no locking action on a container in the corresponding receptacle (3), **characterized in that** the shaft (11) is connected at its inner end to a block (13) that has an eccentric protrusion (13a), a reset lever (15) being present and also connected to said internal end and adapted to return said locking lever (9) to the neutral position if it has been left in an active position due to actuation by the device (10), whereby it further comprises an abutment (14) which is provided with at least one tab, said abutment being adapted to selectively assume, as a consequence of rotation about an axis which is parallel to the axis of the star conveyor (1) and which is commanded by adapted means which can be programmed as a function of the number of containers to be rejected or to be diverted for functional reasons, a first position of interference by a tab with the eccentric protrusion (13a) of at least one block (13) that arrives at the device (10), so as to cause the rotation of the corresponding locking lever (9) from the neutral position to the active position in which it locks the container that is present in the corresponding receptacle (3), and a second position, in which no tab interferes with one of said eccentric protrusions (13a).

2. The device according to claim 1, **characterized in that** each tab of the abutment (14) is provided with a wheel (14a, 14b) which is adapted to make contact with the eccentric protrusion (13a) of a block (13).

3. The device according to one or more of the preceding claims, **characterized in that** the abutment (14) is provided with two tabs which are mutually opposite at 180°.

4. The device according to one or more of the preceding claims, **characterized by** the presence of a cam (16) which is adapted to make contact with the reset lever (15) in order to cause the rotation thereof from the condition of protrusion from the support (12) of the shaft (11), which is assumed when the corresponding locking lever (9) is in the active position, to the condition of retraction within said support (12), which is assumed when said locking lever (9) is in the neutral position.

## Patentansprüche

1. Vorrichtung (10) zum Betätigen von Hebeln (9) zum Festsetzen von Behältern in Aufnahmen (3) eines Ausgabesternförderers (1) in einer Etikettiermaschine, wobei die Vorrichtung für jede Aufnahme (3) eine Halterung (12) für eine Welle (11) umfasst, die an ihrem äußeren Ende an einen der Hebel (9) angeschlossen ist, die sich der Vorrichtung (10) immer in einer neutralen Position darstellen, so dass keine Festsetzwirkung auf einen Behälter in der entsprechenden Aufnahme (3) ausgeübt wird, wobei die Welle (11) an ihrem inneren Ende an einen Block (13) angeschlossen ist, der einen exzentrischen Vorsprung (13a) besitzt, wobei ein Rückstellhebel (15) vorhanden und auch an das innere Ende angeschlossen und dazu angepasst ist, den Festsetzhebel (9) in die neutrale Stellung zurückzustellen, falls er aufgrund einer Betätigung durch die Vorrichtung (10) in einer aktiven Stellung belassen wurde, wobei sie darüber hinaus einen Anschlag (14) aufweist, der mit mindestens einer Lasche versehen ist, wobei der Anschlag dazu angepasst ist, infolge einer Drehung um eine Achse, die parallel zur Achse des Sternförderers (1) ist, und die durch dazu angepasste Mittel gesteuert wird, die in Abhängigkeit von der Anzahl von aus funktionalen Gründen zu verwerfenden oder umzulenkenden Behältern programmiert werden kann, wahlweise eine erste Stellung einer Beeinflussung durch eine Lasche mit dem exzentrischen Vorsprung (13a) mindestens eines an der Vorrichtung (10) ankommenden Blocks (13) einzunehmen, um die Drehung des entsprechenden Festsetzhebels (9) von der neutralen Stellung in die aktive Stellung zu bewirken, in der er den Behälter festsetzt, der in der entsprechenden Aufnahme (3) vorhanden ist, und eine zweite Stellung einzunehmen, in der keine Lasche einen der exzentrischen Vorsprünge (13a) beeinflusst.

2. Vorrichtung nach Anspruch 1, **dadurch gekennzeichnet, dass** jede Lasche des Anschlags (14) mit einem Rad (14a, 14b) versehen ist, das dazu angepasst ist, einen Kontakt mit dem exzentrischen Vorsprung (13a) eines Blocks (13) herzustellen.

3. Vorrichtung nach einem oder mehreren der vorhergehenden Ansprüche, **dadurch gekennzeichnet, dass** der Anschlag (14) mit zwei Laschen versehen ist, die einander um 180° entgegengesetzt sind.

4. Vorrichtung nach einem oder mehreren der vorhergehenden Ansprüche, **gekennzeichnet durch** das Vorhandensein eines Nockens (16), der dazu angepasst ist, einen Kontakt mit dem Rückstellhebel (15) herzustellen, um dessen Drehung von dem von der Halterung (12) der Welle (11) vorstehenden Zustand, der eingenommen ist, wenn sich der entsprechende Festsetzhebel (9) in der aktiven Stellung befindet, zu dem in die Halterung (12) zurückgezogenen Zustand zu bewirken, der eingenommen ist, wenn sich der Festsetzhebel (9) in der neutralen Stellung befindet.

## Revendications

1. Dispositif (10) pour actionner des leviers (9) afin de verrouiller des conteneurs dans des réceptacles (3) d'un convoyeur de sortie en étoile (1) dans une machine d'étiquetage, le dispositif comportant, pour chaque réceptacle (3), un support (12) pour un arbre (11) connecté à son extrémité extérieure à l'un desdits leviers (9) qui sont toujours présentés au dispositif (10) dans une position neutre afin de n'exercer aucune action de verrouillage sur un conteneur dans le réceptacle correspondant (3), **caractérisé en ce que** l'arbre (11) est connecté à son extrémité intérieure à un bloc (13) possédant une saillie excentrée (13a), un levier de réenclenchement (15) étant présent et connecté lui aussi à ladite extrémité intérieure et apte à faire revenir ledit levier de verrouillage (9) dans la position neutre s'il a été laissé en position active du fait de son actionnement par le dispositif (10), raison pour laquelle il comprend en outre une butée (14) pourvue d'au moins une languette, ladite butée étant apte à prendre sélectivement, par suite de rotation autour d'un axe qui est parallèle à l'axe du convoyeur en étoile (1) et qui est commandé par un moyen adéquat programmable en fonction du nombre de conteneurs à rejeter ou à détourner pour des raisons pratiques, une première position d'interaction d'une languette avec la saillie excentrée (13a) d'au moins un bloc (13) qui arrive au niveau du dispositif (10), de manière à faire tourner le levier de verrouillage correspondant (9) de la position neutre à la position active dans laquelle il verrouille le conteneur présent dans le réceptacle correspondant (3), et une seconde position dans laquelle aucune languette n'interagit avec l'une desdites saillies excentrées (13a).

2. Dispositif selon la revendication 1, **caractérisé en ce que** chaque languette de la butée (14) est munie d'une roulette (14a, 14b) destinée à venir au contact de la saillie excentrée (13a) d'un bloc (13).

3. Dispositif selon une ou plusieurs des revendications précédentes, **caractérisé en ce que** la butée (14) est munie de deux languettes opposées à 180° l'une par rapport à l'autre.

4. Dispositif selon une ou plusieurs des revendications précédentes, **caractérisé par** la présence d'une came (16) adaptée pour venir au contact du levier de réenclenchement (15) afin de faire tourner celui-ci de la position de sortie hors du support (12) de l'arbre (11), qui est prise lorsque le levier de verrouillage correspondant (9) est dans la position active, à la position de rentrée dans ledit support (12), qui est prise lorsque ledit levier de verrouillage (9) est dans la position neutre.
